# EUROPEAN PATENT APPLICATION

(11) **EP 4 310 870 A1**
(43) Date of publication of application: **24.01.2024**
(21) Application number: 23183860.8
(22) Date of filing: 06.07.2023
(51) Int. Cl.: H01F 19/08, H01F 38/16, H01F 27/34

(54) **POWER CONVERSION DEVICE**

(30) Priority: 22.07.2022 JP 2022117260
(71) Applicant: Hitachi, Ltd., Tokyo 100-8280 (JP)
(72) Inventor: FURUKAWA, Kimihisa, Tokyo, 100-8280 (JP); MABUCHI, Yuuichi, Tokyo, 100-8280 (JP); SHIMADA, Takae, Tokyo, 100-8280 (JP); HUSSAIN, Mohammed Mosaddique Nawaz, Tokyo, 100-8280 (JP); KAMIZUMA, Hiroshi, Tokyo, 100-8280 (JP); KAWAGUCHI, Yuki, Tokyo, 100-8280 (JP); CHOUDHURY, Abhijit, Tokyo, 100-8280 (JP); KANOUDA, Akihiko, Tokyo, 100-8280 (JP)
(74) Representative: Strehl Schübel-Hopf & Partner

(57) **Abstract**

An aspect of the present disclosure is a power conversion device including: a primary-side transformer to which a primary AC voltage is input from a primary-side circuit; and a secondary-side transformer that outputs a secondary AC voltage lower than the primary AC voltage to a secondary-side circuit. The primary-side transformer includes a primary-side primary winding to which the primary AC voltage is input, and a primary-side secondary winding to which power is transmitted from the primary-side primary winding. The secondary-side transformer includes a secondary-side primary winding constituting a closed circuit together with the primary-side secondary winding, and a secondary-side secondary winding to which power is transmitted from the secondary-side primary winding and which outputs the secondary AC voltage. The primary-side circuit and the closed circuit are connected to a common potential.

## Description

### BACKGROUND OF THE INVENTION

### 1. Field of the Invention

The present disclosure relates to a power conversion device.

### 2. Description of the Related Art

Conventionally, a radio frequency high-voltage transformer is known (see, for example, paragraphs 0002 to 0003 of JP H06-20855 A). The radio frequency high-voltage transformer is generally provided with a shield plate, which is a conductive thin plate with a ground potential called an interference prevention plate, between a primary winding and a secondary winding of the transformer in order to prevent an abnormal voltage generated in one winding from shifting to the other winding.

In such a transformer, the primary winding, the shield plate, and the secondary winding are coupled by electrostatic capacitance. In this state, when an abnormal voltage is generated in the primary winding or the secondary winding for some reason, the abnormal voltage is transmitted to the shield plate through the electrostatic capacitance and is grounded, and does not shift to the other winding.

### SUMMARY OF THE INVENTION

In the transformer as described above, the magnetic flux is concentrated between the primary winding and the secondary winding. That is, since the leakage magnetic flux is large between the primary winding and the secondary winding, when the shield plate is disposed between the primary winding and the secondary winding, an eddy current is induced in the shield plate. In particular, in a radio frequency transformer, induction of an eddy current remarkably appears, and a resistance loss occurs. In addition, the shielding effect of the shield plate reduces the magnetic coupling between the primary winding and the secondary winding.

The present disclosure provides a power conversion device capable of preventing generation of an eddy current and improving magnetic coupling.

An aspect of the present disclosure is a power conversion device including: a primary-side transformer to which a primary AC voltage is input from a primary-side circuit; and a secondary-side transformer that outputs a secondary AC voltage lower than the primary AC voltage to a secondary-side circuit, in which the primary-side transformer includes a primary-side primary winding to which the primary AC voltage is input and a primary-side secondary winding to which power is transmitted from the primary-side primary winding, in which the secondary-side transformer includes a secondary-side primary winding that forms a closed circuit together with the primary-side secondary winding, and a secondary-side secondary winding to which power is transmitted from the secondary-side primary winding and which outputs the secondary AC voltage, and in which the primary-side circuit and the closed circuit are connected to a common potential.

According to the above aspect of the present disclosure, it is possible to provide the power conversion device capable of preventing generation of an eddy current and improving magnetic coupling.

### BRIEF DESCRIPTION OF THE DRAWINGS

Fig. 1 is a circuit diagram illustrating an embodiment of a power conversion device according to the present disclosure;
Fig. 2 is a circuit diagram illustrating a first modification of the power conversion device of Fig. 1;
Fig. 3 is a circuit diagram illustrating a second modification of the power conversion device of Fig. 1;
Fig. 4 is a circuit diagram illustrating a third modification of the power conversion device of Fig. 1; and
Fig. 5 is a schematic cross-sectional view illustrating a configuration example of the power conversion device of Fig. 1.

### DESCRIPTION OF THE PREFERRED EMBODIMENTS

Hereinafter, an embodiment of a power conversion device according to the present disclosure will be described with reference to the drawings.

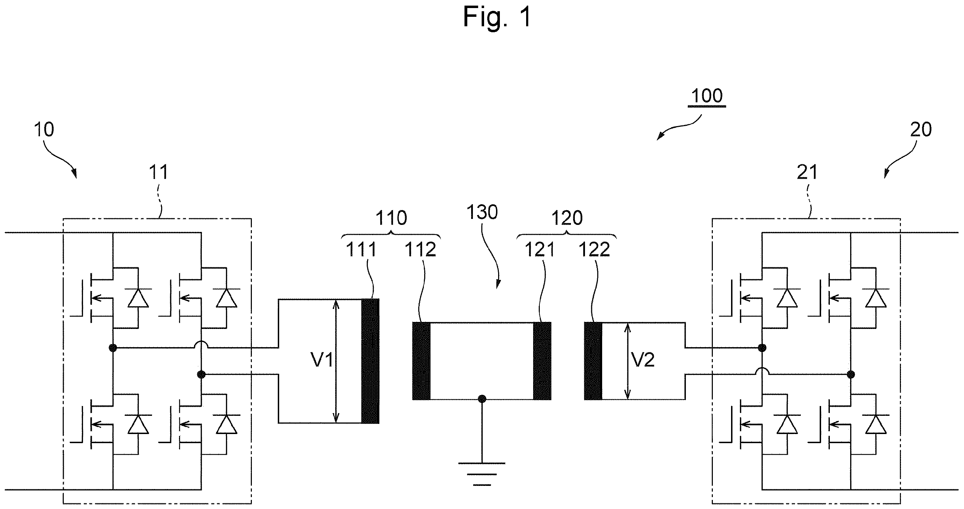

Fig. 1 is a circuit diagram illustrating the embodiment of the power conversion device according to the present disclosure. A power conversion device 100 of the present embodiment is, for example, a small semiconductor transformer (SST: Solid State Transformer) applicable to a charging system of a moving body such as an electric vehicle or a drone. The power conversion device 100 of the present embodiment realizes, for example, switching between rapid charging and charging of a plurality of devices, and miniaturization, weight reduction, space saving, and reliability improvement of the charging system.

The power conversion device 100 is, for example, a radio frequency transformer including a primary-side transformer 110 to which a primary AC voltage V1 is input from a primary-side circuit 10, and a secondary-side transformer 120 that outputs a secondary AC voltage V2 lower than the primary AC voltage V1 to a secondary-side circuit 20.

The primary-side transformer 110 of the power conversion device 100 includes a primary-side primary winding 111 to which the primary AC voltage V1 is input from the primary-side circuit 10, and a primary-side secondary winding 112 to which power is transmitted from the primary-side primary winding 111. In the primary-side transformer 110, the primary-side primary winding 111 is a high pressure winding and the primary-side secondary winding 112 is a low-pressure winding.

The secondary-side transformer 120 of the power conversion device 100 includes a secondary-side primary winding 121 constituting a closed circuit 130 together with the primary-side secondary winding 112, and a secondary-side secondary winding 122 to which power is transmitted from the secondary-side primary winding 121 and which outputs the secondary AC voltage V2. In the secondary-side transformer 120, both the secondary-side primary winding 121 and the secondary-side secondary winding 122 are low-pressure windings.

An input terminal of the primary-side circuit 10 is connected to, for example, a high-voltage AC power supply of 6.6 kV (not illustrated). The primary-side circuit 10 includes, for example, a primary-side AC/DC converter 11 connected to the primary-side transformer 110 of the power conversion device 100. AC power supplied from an AC power supply (not illustrated) to the input terminal of the primary-side circuit 10 is converted into DC power by an AC/DC converter (not illustrated) and input to the primary-side AC/DC converter 11. The primary-side AC/DC converter 11 converts the input DC power into AC power and supplies the AC power to a pair of input terminals of the primary-side transformer 110 of the power conversion device 100.

More specifically, one and the other of a pair of output terminals of the primary-side AC/DC converter 11 that outputs the primary AC voltage V1 are connected to one end and the other end of the primary-side primary winding 111 constituting the primary-side transformer 110 of the power conversion device 100, respectively. The primary-side AC/DC converter 11 includes, for example, four switching elements connected in an H-bridge shape and a free wheeling diode (FWD) connected in anti-parallel to these switching elements. The switching element is, for example, a metal-oxide-semiconductor field-effect transistor (MOSFET).

A pair of input terminals of the secondary-side circuit 20 is connected to one end and the other end of the secondary-side secondary winding 122 constituting the secondary-side transformer 120 of the power conversion device 100. The secondary-side circuit 20 includes, for example, a secondary-side AC/DC converter 21 connected to one end and the other end of the secondary-side secondary winding 122 that outputs the secondary AC voltage V2 lower than the primary AC voltage V1.

The secondary-side AC/DC converter 21 of the secondary-side circuit 20 converts AC power input from the secondary-side secondary winding 122 of the power conversion device 100 into DC power, and transmits the DC power to a charging target such as an electric vehicle via a switch or a repeater (not illustrated). Similarly to the primary-side AC/DC converter 11, the secondary-side AC/DC converter 21 includes four switching elements connected in an H-bridge shape and an FWD connected in anti-parallel to these switching elements.

The power conversion device 100 includes the closed circuit 130 constituted by the primary-side secondary winding 112 of the primary-side transformer 110 and the secondary-side primary winding 121 of the secondary-side transformer 120. More specifically, the closed circuit 130 is configured by connecting one end of the primary-side secondary winding 112 and one end of the secondary-side primary winding 121, and connecting the other end of the primary-side secondary winding 112 and the other end of the secondary-side primary winding 121. The power conversion device 100 of the present embodiment is characterized in that the primary-side circuit 10 and the closed circuit 130 are connected to a common potential. In the example illustrated in Fig. 1, the common potential to which the primary-side circuit 10 and the closed circuit 130 are connected is the ground potential.

Hereinafter, the operation of the power conversion device 100 of the present embodiment will be described.

As described in JP H06-20855 A described above, in a conventional radio frequency transformer in which a shield plate, which is a conductor thin plate having a ground potential called an interference prevention plate, is provided between a primary winding and a secondary winding, an eddy current is induced in the shield plate, and a loss occurs. Furthermore, the shielding effect of the shield plate reduces the magnetic coupling between the primary winding and the secondary winding.

On the other hand, as described above, the power conversion device 100 of the present embodiment includes the primary-side transformer 110 to which the primary AC voltage V1 is input from the primary-side circuit 10, and the secondary-side transformer 120 that outputs the secondary AC voltage V2 lower than the primary AC voltage V1 to the secondary-side circuit 20. The primary-side transformer 110 includes the primary-side primary winding 111 to which the primary AC voltage V1 is input, and the primary-side secondary winding 112 to which power is transmitted from the primary-side primary winding 111. The secondary-side transformer 120 includes the secondary-side primary winding 121 constituting the closed circuit 130 together with the primary-side secondary winding 112, and the secondary-side secondary winding 122 to which power is transmitted from the secondary-side primary winding 121 and which outputs the secondary AC voltage V2. In the power conversion device 100 of the present embodiment, the primary-side circuit 10 and the closed circuit 130 are connected to a common potential.

With such a configuration, even when interference occurs between the primary-side primary winding 111 and the primary-side secondary winding 112 of the primary-side transformer 110 for some reason, the high-voltage current flowing from the primary-side circuit 10 to the closed circuit 130 flows from the closed circuit 130 to the common potential with the primary-side circuit 10. Therefore, even when interference occurs between the primary-side primary winding 111 and the primary-side secondary winding 112 of the primary-side transformer 110, a high voltage current can be prevented from flowing from the primary-side circuit 10 to the secondary-side circuit 20. Further, in the power conversion device 100 of the present embodiment, the closed circuit 130 is configured by the primary-side secondary winding 112 of the primary-side transformer 110 and the secondary-side primary winding 121 of the secondary-side transformer 120 without using a shield plate as an interference prevention plate. The closed circuit 130 is not affected by the radio frequency magnetic flux and does not generate an eddy current. Therefore, the power conversion device 100 of the present embodiment can reduce the loss as compared with the conventional transformer using the shield plate as the interference prevention plate. Furthermore, in the power conversion device 100 of the present embodiment, the coupling between the primary-side transformer 110 and the secondary-side transformer 120 is enhanced as compared with the conventional transformer using the shield plate, so that magnetic design can be facilitated.

In addition, in the power conversion device 100 of the present embodiment, the common potential to which the primary-side circuit 10 and the closed circuit 130 are connected is the ground potential. With such a configuration, it is possible to further improve safety in a case where interference occurs between the primary-side primary winding 111 and the primary-side secondary winding 112 of the primary-side transformer 110. In addition, it is easy to connect the primary-side circuit 10 and the closed circuit 130 to the common potential. Note that the common potential to which the primary-side circuit 10 and the closed circuit 130 are connected is not limited to the ground potential.

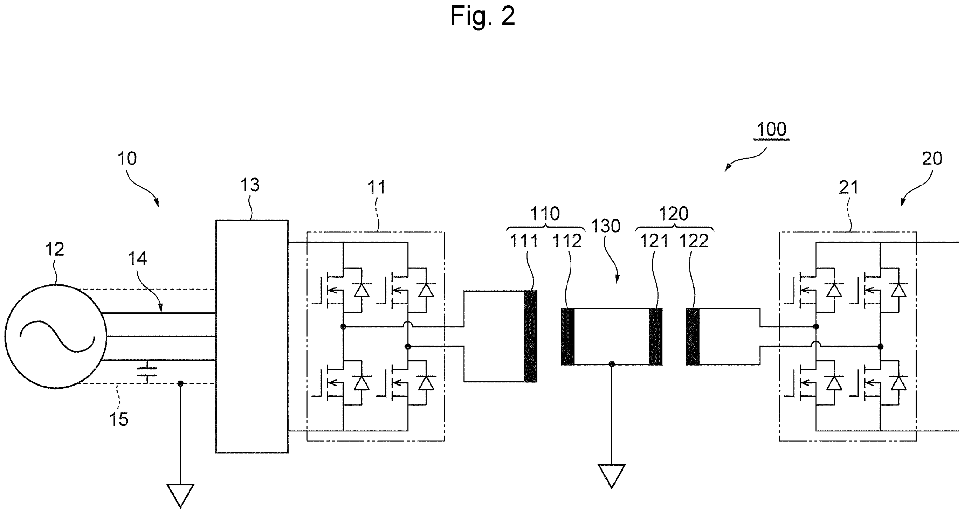

Fig. 2 is a circuit diagram illustrating a first modification of the power conversion device 100 of Fig. 1. In the first modification illustrated in Fig. 2, the primary-side circuit 10 includes, for example, an AC power supply 12, a power supply cable 14 that supplies AC power from the AC power supply 12 to an AC/DC converter 13, and a shield 15 that covers the power supply cable 14. The AC/DC converter 13 converts AC power supplied from the AC power supply 12 via the power supply cable 14 into DC power, and outputs the DC power to the primary-side AC/DC converter 11.

In the modification illustrated in Fig. 2, a ground wire of the power supply cable 14 of the primary-side circuit 10 is connected to the shield 15 covering the power supply cable 14 via the capacitive component, and the shield 15 is connected to the ground that is a potential serving as a reference of the operation of the primary-side circuit 10. The closed circuit 130 is connected to the ground of the primary-side circuit 10 via, for example, a wiring. That is, the primary-side circuit 10 and the closed circuit 130 are connected to the ground of the primary-side circuit 10 as a common potential, for example. The power conversion device 100 having such a configuration can also achieve the same effects as those of the power conversion device 100 according to the above-described embodiment illustrated in Fig. 1.

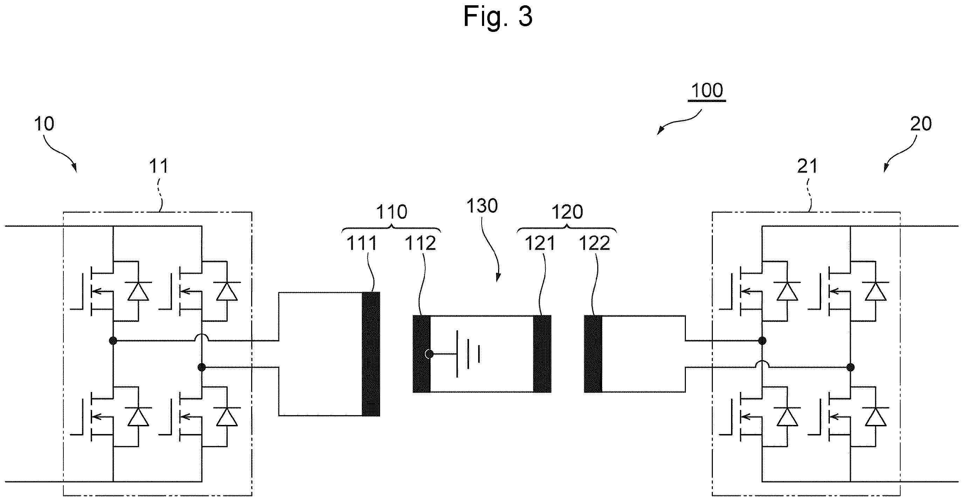

Fig. 3 is a circuit diagram illustrating a second modification of the power conversion device 100 of Fig. 1. A power conversion device 100 according to the present modification is different from the power conversion device 100 illustrated in Fig. 1 in that a primary-side circuit 10 and a midpoint of a primary-side secondary winding 112 of a primary-side transformer 110 is connected to a ground potential which is a common potential. The primary-side circuit 10 and the midpoint of the primary-side secondary winding 112 may be connected to a common potential other than the ground potential, for example, as in the second modification illustrated in Fig. 2.

In the power conversion device 100 according to the present modification, the primary-side circuit 10 and the midpoint of the primary-side secondary winding 112 of the primary-side transformer 110 is connected to the common potential. With this configuration, when interference occurs between the primary-side primary winding 111 and the primary-side secondary winding 112 of the primary-side transformer 110, a high voltage current can be more reliably prevented from flowing from the primary-side circuit 10 to a secondary-side primary winding 121 of a secondary-side transformer 120. In addition, an increase in the number of components of a closed circuit 130 can be suppressed.

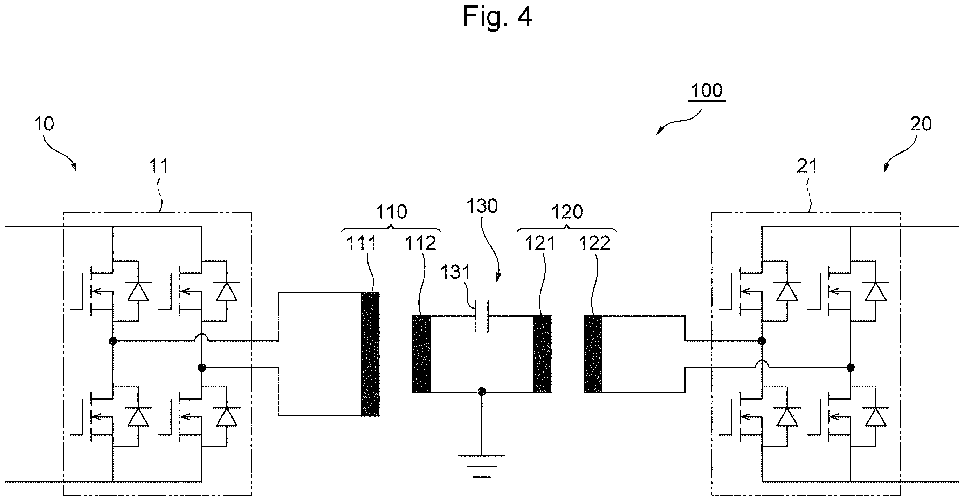

Fig. 4 is a circuit diagram illustrating Modification 3 of the power conversion device 100 of Fig. 1. A power conversion device 100 according to the present modification is different from the power conversion device 100 illustrated in Fig. 1 in that a closed circuit 130 includes a primary-side secondary winding 112 and a capacitor 131 connected in series to the secondary-side primary winding 121.

More specifically, the closed circuit 130 includes, for example, a primary-side secondary winding 112 and a secondary-side primary winding 121, and first and second wirings respectively connecting one ends and the other ends of these wirings. The capacitor 131 is provided in the middle of the first wiring, and the middle of the second wiring is connected to a common potential with the primary-side circuit 10.

With such a configuration, according to the power conversion device 100 of the present modification, not only it is possible to further enhance prevention of interference between a high-pressure primary-side primary winding 111 and the low-pressure primary-side secondary winding 112 of the primary-side transformer 110, but also it is possible to suppress polarization.

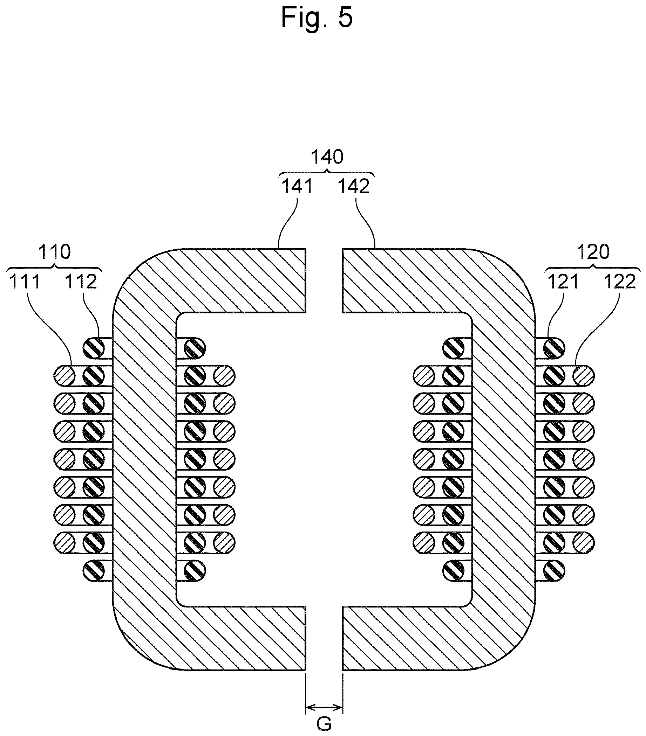

Fig. 5 is a schematic cross-sectional view illustrating a configuration example of the power conversion device 100 of Fig. 1. In the example illustrated in Fig. 5, the power conversion device 100 further includes a core 140 constituting the primary-side transformer 110 and the secondary-side transformer 120. The core 140 includes a primary-side core 141 constituting the primary-side transformer 110 and a secondary-side core 142 constituting the secondary-side transformer 120. The primary-side core 141 and the secondary-side core 142 are separated, and a predetermined gap G is formed between the primary-side core 141 and the secondary-side core 142.

The primary-side secondary winding 112 on the low-voltage side of the primary-side transformer 110 is wound around the outer periphery of the primary-side core 141, and the primary-side primary winding 111 on the high-voltage side of the primary-side transformer 110 is wound around the outer periphery of the primary-side secondary winding 112. The secondary-side primary winding 121 of the secondary-side transformer 120 constituting the closed circuit 130 together with the primary-side secondary winding 112 of the primary-side transformer 110 is wound around the outer periphery of the secondary-side core 142. Further, the secondary-side secondary winding 122 on the low-voltage side of the secondary-side transformer 120 connected to the secondary-side circuit 20 is wound around the outer periphery of the secondary-side primary winding 121.

For example, by adopting the configuration illustrated in Fig. 5, the power conversion device 100 can enhance prevention of interference between the high-voltage primary-side primary winding 111 of the primary-side circuit 10 and the low-voltage secondary-side primary winding 121 and the secondary-side secondary winding 122 of the secondary-side transformer 120, and at the same time, can suppress a decrease in magnetic coupling.

Although the embodiment of the power conversion device according to the present disclosure has been described in detail with reference to the drawings, the specific configuration is not limited to the embodiment, and design changes and the like without departing from the gist of the present disclosure are included in the present disclosure.

## Claims

1. A power conversion device comprising:
a primary-side transformer to which a primary AC voltage is input from a primary-side circuit; and
a secondary-side transformer that outputs a secondary AC voltage lower than the primary AC voltage to a secondary-side circuit,
wherein the primary-side transformer includes a primary-side primary winding to which the primary AC voltage is input and a primary-side secondary winding to which power is transmitted from the primary-side primary winding,
wherein the secondary-side transformer includes a secondary-side primary winding that forms a closed circuit together with the primary-side secondary winding, and a secondary-side secondary winding to which power is transmitted from the secondary-side primary winding and which outputs the secondary AC voltage, and
wherein the primary-side circuit and the closed circuit are connected to a common potential.

2. The power conversion device according to claim 1, wherein the common potential is a ground potential.

3. The power conversion device according to claim 1, wherein a midpoint of the primary-side secondary winding is connected to the common potential.

4. The power conversion device according to claim 1, wherein the closed circuit includes a capacitor connected in series to the primary-side secondary winding and the secondary-side primary winding.
